# EUROPÄISCHE PATENTSCHRIFT

(11) **EP 0 828 638 B1**
(45) Veröffentlichungstag und Bekanntmachung des Hinweises auf die Patenterteilung: **15.05.2002**
(21) Anmeldenummer: 97914113.2
(22) Anmeldetag: 04.02.1997
(51) Int. Cl.: B60S 1/38

(54) **WISCHBLATT FÜR SCHEIBEN VON KRAFTFAHRZEUGEN**
MOTOR-VEHICLE WINDSCREEN WIPER BLADE
BALAI D'ESSUIE-GLACE POUR VITRES DE VEHICULES A MOTEUR

(30) Priorität: 12.03.1996 DE 19609578
(43) Veröffentlichungstag der Anmeldung: 18.03.1998
(73) Patentinhaber: ROBERT BOSCH GMBH, 70442 Stuttgart (DE)
(72) Erfinder: NAGY, Tibor, B-3012 Leuven (BE)
(86) Internationale Anmeldenummer: DE9700202
(87) Internationale Veröffentlichungsnummer: WO9733780

(56) Entgegenhaltungen:
- EP-A- 0 625 452
- US-A- 3 882 567
- US-A- 4 045 838
- US-A- 4 716 618
- PATENT ABSTRACTS OF JAPAN vol. 018, no. 521 (M-1681), 30.September 1994 & JP 06 179349 A (BANDO CHEM IND LTD), 28.Juni 1994,

## Beschreibung

### Stand der Technik

Die Erfindung bezieht sich auf ein Wischblatt zum Reinigen von Scheiben von Kraftfahrzeugen der im Oberbegriff der Ansprüche 1 und 4 bezeichneten Art.

Üblicherweise werden die zum Wischblatt gehörenden Wischleisten, welche beispielsweise zur Entfernung von Wassertropfen auf der Windschutzscheibe von Kraftfahrzeug dienen und an den vor der Windschutzscheibe hin- und herbewegbaren Scheibenwischern einer Scheibenwischanlage befestigt werden, hergestellt, indem ein zuvor zusammengemischtes und vulkanisiertes Gummiausgangsmaterial, also ein unvulkanisierter synthetischer Kautschuk, in einer Metallform geformt und vulkanisiert wird. Danach wird die Oberfläche der so erhaltenen Gummiwischleiste nachbehandelt um den Reibungswiderstand an der zu wischenden Scheibe entsprechend den Erfordernissen zu vermindern bzw. das Gleitvermögen der Wischgummileiste auf der zu wischenden Scheibe zu verbessern. Der anzustrebende Reibwert µ darf bei einer Temperatur t von 23° ± 5° C und einer relativen Luftfeuchte von 50 ± 3 % den Wert von 2,0 nicht übersteigen. Diese Oberflächennachbehandlung besteht beispielsweise in einem Härten der Oberfläche der Wischgummileiste durch Chlorierung oder in einer Beschichtung, um auf der Wischleiste eine Oberflächenschicht zu erzielen, welche ein feines, schmierendes Pulver, beispielsweise pulverförmiges Molibdänsulfid enthält. Wenn auch das Chlorieren den Reibungswiderstand herabsetzt und das Gleitvermögen verbessert, so fehlt doch die erforderliche Verschleißfestigkeit. Das Aufbringen einer schmiermittelpulverhaltigen Oberflächenschicht ist mit dem Nachteil verbunden, daß diesselbe bereits nach kurzer Gebrauchsdauer der Wischleiste abgeschabt wird; ihr also die nötige Standfestigkeit fehlt.

Im übrigen ist zu berücksichtigen, daß die Verbesserung der Gleiteigenschaften von Wischleisten durch Verminderung des Reibungskoeffizienten zwischen Wischleiste und Glasoberfläche der Windschutzscheibe insofern Schwierigkeiten mit sich bringt, als sie im Kippsteg nicht umklappen, wenn das Wischblatt während des Betriebs der üblicherweise als Pendelwischanlage ausgebildeten Scheibenwischanlage seine Bewegungsrichtung umkehrt, so daß die Wischleiste nicht geschleppt, sondern geschoben wird. Ein einwandfreier, geräuscharmer Betrieb der Wischanlage ist dabei ausgeschlossen.

Um dieses Problem zu lösen hat man bei einem bekannten Wischblatt (DE 34 40 677 A1) der in Rede stehenden Art die während des Betriebs des Wischblatts mit der Scheibe in Berührung gelangenden Bereiche der Wischleiste aus einem schmierenden Synthesegummi, beispielsweise aus Urethangumai, Styrolbutadiengummi, Fluorgummi, chlorsulfoniertem Gummi oder aus einem Gemisch dieser Materialien hergestellt. Derartige Wischleisten sind jedoch nicht oder nur unzulänglich halogenisierbar, so daß der gewünschte Reibwert kaum erreicht werden kann.

Aus der US-A 4,716,618 ist ein Wischblatt bekannt, das aus einer Kopfleiste, einem Kippsteg und einer Wischlippenleiste besteht. Die Oberfläche der Wischlippenleiste und der Kopfleiste besteht teilweise aus einem chlorierten gemischten Gummi.

Der Erfindung liegt die Aufgabe zu Grunde, ein Gummiwischblatt der eingangs geschilderten Art zu schaffen, welches sich durch hervorragende Gleiteigenschaften, insbesondere auch durch einen sehr niedrigen, über lange Zeitspannen gleichbleibenden Reibungswiderstand auszeichnet und kostengünstig herzustellen ist. Es sollen auch Bereiche der Wischleiste mit einem günstigen Reibwert versehen werden, welche gelegentlich mit der zu reinigenden Scheibenoberfläche in Berührung kommen.

Diese Aufgabe wird durch die im kennzeichnenden Teil der Ansprüche 1 und 4 angegebenen Merkmale gelöst.

Dadurch wird erreicht, dass der angestrebte Reibwert zwischen den beiden Gleitpartnern Wischlippenleiste und Fahrzeugscheibe praktisch unbegrenzt erhalten bleibt. Eine gewisse Reibung ist jedoch zum Erreichen der Umkippbewegung der Wischlippenleiste notwendig. Diese Umkippbewegung erfolgt in den Pendel-Umkehrlagen der Wischleiste und stellt die zum Erreichen des ordnungsgemäßen Wischbetriebs erforderliche Schlepplage der Wischlippenleiste in beiden Pendelrichtungen sicher. Zumindest ein Teil der die Außenkontur der Wischlippenleiste bildenden Bereiche besteht dabei aus einem Naturkautschuk mit niedrigem Reibwert, weil dadurch die den Hauptteil der Reinigungsarbeit übernehmende Wischlippenleiste in ihrem Reibwert dem Reibwert der Streifleiste angepasst ist.

Die so ausgestatteten Wischleistenbereiche sind härtbar, wodurch deren Form auch unter schwierigen Wischbedingungen konstant gehalten werden kann. Dadurch wird eine verbesserte und sichere Halterung der Wischleiste in den Krallen des Traggestells gewährleistet und die erforderliche Beweglichkeit der Wischleiste in den Krallen sichgestellt.

Eine besonders kostengünstige Herstellung der Wischleiste ergibt sich, wenn die Wischleiste ein die Kopfleiste umfassendes Basisteil aus synthetischem Kautschuk aufweist, zu dem ein Kernbereich der Streifleiste und der Kippsteg gehören, wenn weiter an dem Kernbereich zwei sich von diesem nacheinander entgegengesetzten Richtungen erstreckende, zur Streifleiste gehörende, aus Naturkautschuk mit niedrigem Reibwert bestehende Flügel angeordnet sind und wenn schließlich der Kippsteg in eine Verbindungsleiste übergeht, an der die aus einem Naturkautschuk mit niedrigem Reibwert bestehende Wischlippenleiste angeordnet ist.

Durch Halogenisierung werden die Naturkautschukbereiche der Wischleiste gehärtet während die anderen Wischleistenbereiche weich und nachgiebig bleiben. Die härtbaren Bereiche können, je nach dem Grad der Halogenisierung, den Erfordernissen angepaßt werden. Dies gilt auch für den gewünschten Reibwert.

Weitere Vorteile der Erfindung sind der nachfolgenden Beschreibung zu entnehmen, die sich auf ein in der Zeichnung dargestelltes Ausführungsbeispiel der Erfindung bezieht.

### Zeichnung

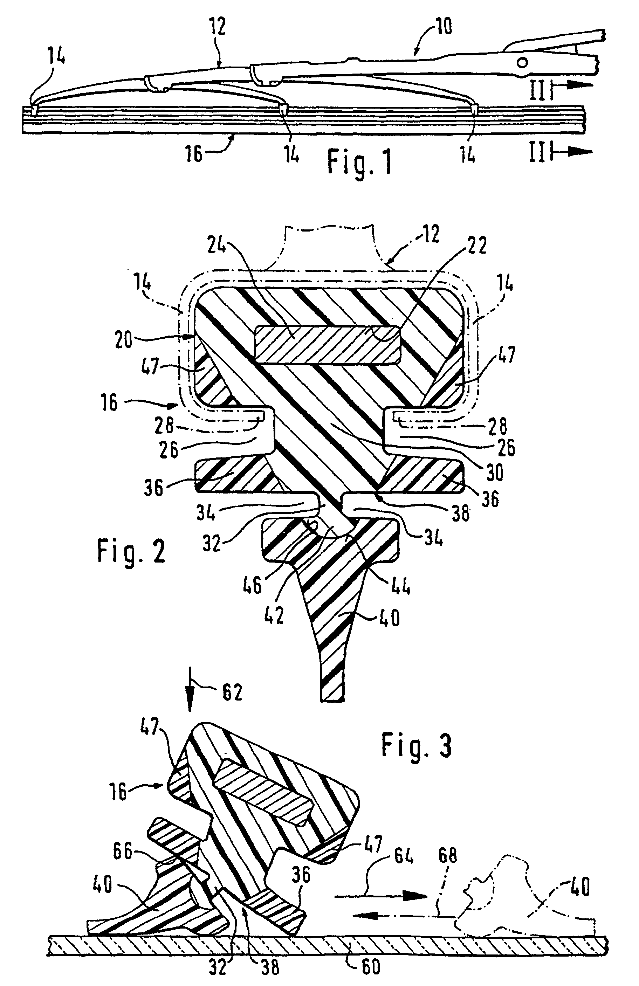

Die Erfindung wird im folgenden anhand eines in der Zeichnung dargestellten Ausführungsbespiels erläutert. Es zeigen Figur 1 eine Teilansicht eines Wischblatts, das ein Traggestell und eine Wischleiste umfaßt, Figur 2 die Schnittfläche eines Schnitts durch die Wischleiste entlang der Linie II-II in vergrößerter Darstellung und Figur 3 die Wischleiste gemäß Figur 2 in einer extremen, nur unter bestimmten Bedingungen erreichten Betriebslage, unmaßstäblich dargestellt.

### Beschreibung des Ausführungsbeispiels

Ein in Figur 1 teilweise und in Ansicht dargestelltes Wischblatt 10 weist ein aus mehreren Tragbügelteilen bestehendes Traggestell 12 auf, das mit Haltekrallen 14 eine langgestreckte Wischleiste 16 aus einem elastischen Material faßt.

In Figur 2 ist der Aufbau der Wischleiste 16 im Schnitt dargestellt. Da die Wischleiste 16 einen über ihre gesamte Länge gleichbleibenden Querschnitt aufweist, kann sie beispielsweise durch Extrusion hergestellt werden. Sie weist eine Kopfleist 20 auf, die von den Haltekrallen 14 des Traggestells 12 gefaßt ist. Die Kopfleiste 20 ist in ihrer Längsrichtung von einem Längskanal 22 durchdrungen, in dem ein schienenartiges Federelement 24 untergebracht ist, welches sich zumindest annähernd über die ganze Länge der Wischleiste 16 erstreckt und für eine ordnungsgemäße Verteilung der Wischblatt-Auflagekraft sorgt. Auf der vom Traggestell abgewandten Seite weist die Kopfleiste 20 zwei einander gegenüberliegende Längsnuten 26 auf, in welche die Haltekrallen 14 mit ihren Endabschnitten 28 eintauchen. Zwischen den beiden Längsnuten 26 verbleibt ein in die Kopfleiste übergehendes Basisteil 30 der Wischleiste 16. An der von der Kopfleiste 20 abgewandten Seite des Basisteils 30 schließt sich ein schmaler Kippsteg 32 an, der durch schmale Längsschlitze 34 gebildet ist, welche sich mit Abstand von den Längsnuten 26 befinden. Der Kippsteg 32 verbleibt zwischen den Grundflächen der gegeneinander gerichteten und einander gegenüberliegenden Längsschlitzen 34. Zwischen den Längsnuten 26 und den Längsschlitzen 34 verbleiben flügelartige Verbreiterungen 36, welche eine über die ganze Breite der Wischleiste 16 durchgehende Streifleiste 38 bilden. Der Kippsteg 32 geht an seinem von der Streifleiste 38 abgewandten Ende in eine Wischlippenleiste 40 über, die zumindest mit ihrem freien Ende während des Betriebs der Wischvorrichtung auf der zu wischenden Scheibe aufliegt und Reinigungsarbeit übernimmt.

Wie Figur 2 zeigt, besteht der größte Teil der Wischlippenleiste 40 aus einem anderen Material als die Kopfleiste 20, das Basisteil 30 und der Kippsteg 32. Die Wischlippenleiste 40 ist über eine einstückig mit dem Kippsteg 32 verbundene Verbindungsleiste 42 verbunden. Diese Verbindungsleiste 42 erstreckt sich ebenfalls über die gesamte Länge der Wischleiste 16. Sie weist eine der Wischlippenleiste 40 zugewandte gekrümmte Endkontur 44 auf, an der eine Gegenkontur 46 der im Querschnitt etwa keilförmigen Wischlippenleiste 40 angepaßt ist. Dadurch ergibt sich eine verhältnismäßig großflächige Verbindungsfläche zwischen dem Kippsteg 32 und der Wischlippenleiste 40. Weiter zeigt Figur 2, daß die beiden Verbreiterungen oder Flügel 36 der Wischleiste 16 aus einem anderen Material bestehen als die Kopfleiste 20 und das Basisteil 30. Diese beiden Bereiche 20, 30 der Wischleiste 16 sowie der Kippsteg 32 und die Verbindungsleiste 42 bestehen aus einem synthetischen Kautschuk. Die Flügel 36 der Wischleiste 16 jedoch, aber zumindest deren die Außenkontur der Streifleiste bildenden Bereiche, bestehen aus einem Naturkautschuk mit niedrigem Reibwert. Dies gilt auch für die Wischlippenleiste 40, die aus dem gleichen Material gefertigt ist wie die Flügel 36 der Streifleiste 38. In bestimmten Fällen kann es noch Vorteil sein wenn auch die der Scheibe 60 (Figur 3) zugewandten, die Außenkontur der Kopfleiste 20 bildenden Eckbereiche 47 aus einem Naturkautschuk mit niedrigem Reibwert bestehen. Dadurch kann sich die Wischleiste leichter in den Haltekrallen des Traggestells bewegen, was besonders beim Überstreichen von verschieden stark gekrümmten Bereichen der Scheibe notwendig ist. Weiter wird auch die Gefahr einer nachteiligen Verformung der Eckbereiche 47 ausgeschlossen. Die aus dem besagtem Naturkautschuk bestehenden Bereiche 40, 36, 47 der Wischleiste 16 können zusammen mit den aus dem synthetischen Kautschuk bestehenden Bereiche 20, 30, 32, 42 der Wischleiste 16 in einem Arbeitsgang einstückig extrudiert und vulkanisiert sein.

Im folgenden soll die Wirkungsweise des Wischblatts 10 auf der Scheibe 60 anhand von Figur 3 erläutert werden, in welcher die Wischleiste 40 in einer extremen Schräglage gegenüber der Scheibe 60 dargestellt ist. Solche extremen Positionen können sich bei bestimmten, dem Fachmann bekannten Voraussetzungen - wie z.B. starke Scheibenkrümmung, hoher Anpressdruck des Wischblatts an der Scheibe, verformte Wischerarme etc. - ergeben. Um eine Reinigungswirkung zu erzielen, muß die Wischleiste 16 zur Scheibe hin belastet werden. Dies ist in Figur 3 durch den Pfeil 62 angedeutet. Wenn nun das Wischblatt in einer durch den Pfeil 64 angedeuteten Bewegungsrichtung über die Oberfläche der Scheibe 60 bewegt wird, kippt die Wischlippenleiste 40 in eine sogenannte Schlepplage, in welcher diese über die Scheibe 60 geschleppt wird. Dabei kann bei der schon geschilderten, ungünstigen Betriebssituation der eine, der Scheibe 60 zugewandte Flügel 36 der Streifleiste 38 mit seinem Endbereich die Oberfläche der zu wischenden Scheibe 60 berühren. Bei den schon erwähnten bekannten Wischblattern mit Flügel aus synthetischem Kautschuk - bei denen der Reibwert zu hoch ist - entstehen unerwünschte, bremsende und Vibrationen verursachende Nebeneffekte, welche darüber hinaus die Wischqualität nachteilig beeinflußen. Weiter zeigt Figur 3, daß sich die Wischlippenleiste 40 mit einer Eckkante 66 an der Streifleiste 38 abstützt, so daß die Anlegekraft (Pfeil 62) ordnungsgemäß zur Wirkung kommt. Wenn das Wischblatt 10 in seine Umkehrlage gelängt und seine Bewegungsrichtung umkehrt, wird es in Gegenrichtung (Pfeil 68) über die Scheibe 60 bewegt. Dabei kippt die Wischlippenleiste 40 im Kippsteg 32 in seine in Figur 3 strichpunktiert angedeutete andere Betriebslage, so daß die Wischlippenleiste 40 ebenfalls über die Scheibe geschleppt und nicht geschoben wird. Um ein sicheres Umkippen der Wischlippenleiste 40 in deren jeweilige Schlepplage sicherzustellen, ist eine gewisse Reibung zwischen der Scheibe und der Wischlippenleiste 40 erforderlich. Dieser Forderung muß der Reibwert des Naturkautschukmaterials Rechnung tragen. Allerdings darf dieser zum Kippen in die jeweilige Schlepplage erforderliche Reibwert nicht wesentlich überschritten werden, damit die der Erfindung zugrundeliegende Aufgabe gelöst werden kann.

Der Erfindungsgedanke sieht also vor, daß zumindest ein Teil der die Außenkontur der Streifleiste 38 bildenden Bereiche bzw. der die Außenkontur der Wischlippenleiste 40 bildenden Bereiche aus einem Naturkautschuk mit niedrigem Reibwert bestehen. Es sind dabei vorzugsweise die Bereiche gemeint, welche während des Wischbetriebs an der Scheibe 60 anliegen könnten (Figur 3).

Der anzustrebende Reibwert µ sollte, gemessen bei einer Temperatur von 23 ± 5° C und einer Luftfeuchtigkeit von 50 ± 3 % ungefähr 2,0 oder besser kleiner als 2,0 betragen.

## Patentansprüche

1. Wischblatt (10) für Scheiben (60) von Kraftfahrzeugen, mit einer langgestreckten, einen gleichbleibenden Querschnitt aufweisenden Wischleiste (16), die von einem Traggestell (12) gehalten und zur wischenden Scheibe (60) belastet quer zu ihrer Längserstreckung über die Scheibe bewegbar ist, wobei die Wischleiste (16) in ihrer Längserstreckung eine von dem Traggestell (12) gefaßte aus einem synthetischen Kautschuk bestehende Kopfleiste (20), einen langgestreckten Kippsteg (32) und eine an der Scheibe (60) andrückbare Wischlippenleiste (40) aufweist, **dadurch gekennzeichnet, daß** die Kopfleiste (20) in ihrer Längsrichtung von einem Längskanal (22) durchdrungen ist, in dem ein schienenartiges Federelement (24) untergebracht ist, und daß die Kopfleiste (20) eine mit dieser verbundene, zumindest zeitweilig die Scheibe (60) berührende flügelartige Verbreiterung (36) als Streifleiste (38) aufweist, wobei zumindest ein Teil der die Außenkontur der Streifleiste (38) bildenden Bereiche (36) aus einem Naturkautschuk mit niedrigem Reibwert besteht.

2. Wischblatt nach Anspruch 1, **dadurch gekennzeichnet, daß** zumindest ein Teil der die Außenkontur der Wischlippenleiste (40) bildenden Bereiche aus einem Naturkautschuk mit niedrigem Reibwert bestehen.

3. Wischblatt nach einem der Ansprüche 1 oder 2, **dadurch gekennzeichnet, daß** der Scheibe (60) zugewandte, die Außenkontur der Kopfleiste (20) bildende Bereiche (47) aus einem Naturkautschuk mit niedrigem Reibwert bestehen.

4. Wischblatt (10) für Scheiben (60) von Kraftfahrzeugen, mit einer langgestreckten, einen gleichbleibenden Querschnitt aufweisenden Wischleiste (16), die von einem Traggestell (12) gehalten und zur wischenden Scheibe (60) belastet quer zu ihrer Längserstreckung über die Scheibe bewegbar ist, wobei die Wischleiste (16) in ihrer Längserstreckung eine von dem Traggestell (12) gefaßte, aus einem synthetischen Kautschuk bestehende Kopfleiste (20), einen langgestreckten Kippsteg (32) und eine an der Scheibe (60) andrückbare Wischlippenleiste (40) aufweist, **dadurch gekennzeichnet, daß** die Kopfleiste (20) eine mit dieser verbundene, zumindest zeitweilig die Scheibe (60) berührende flügelartige Verbreiterung (36) als Streifleiste (38) aufweist und daß sie ein Basisteil (30) aus einem synthetischen Kautschuk umfaßt, zu dem ein Kernbereich der Streifleiste (38) und der Kippsteg (32) gehören, daß an dem Kernbereich zwei sich von diesem nach einander entgegengesetzten Richtungen erstreckende, zur Streifleiste (38) gehörende, aus Naturkautschuk mit niedrigem Reibwert bestehende Flügel (36) angeordnet sind, und daß der Kippsteg (32) in eine Verbindungsleiste (42) übergeht, an der die aus einem Naturkautschuk mit niedrigem Reibwert bestehende Wischlippenleiste (40) angeordnet ist.

5. Wischblatt nach einem der Ansprüche 1 bis 4, **dadurch gekennzeichnet, daß** zumindest die aus dem Naturkautschuk bestehenden Bereiche der Wischleiste (16) halogenisiert sind.

6. Wischblatt nach einem der vorhergehenden Ansprüche, **dadurch gekennzeichnet, daß** der Reibwert, gemessen bei einer Temperatur von ca. 23° C und einer Luftfeuchtigkeit von ca. 50 %, ungefähr 2,0, insbesondere kleiner als 2,0 ist.

## Claims

1. Wiper blade (10) for windscreens (60) of motor vehicles, with an elongated wiper strip (16), which has a uniform cross section, is held by a supporting frame (12) and can be moved transversely to its longitudinal extent over the windscreen (60) to be wiped, while being subjected to loading with respect to the said windscreen, the wiper strip (16) having in its longitudinal extent a head strip (20), which is secured by the supporting frame (12) and consists of a synthetic rubber, an elongated swivelling web (32) and a wiper lip strip (40), which can be pressed against the windscreen (60), **characterized in that** the head strip (20) is penetrated in its longitudinal direction by a longitudinal channel (22), in which a rail-like spring element (24) is accommodated, and **in that** the head strip (20) has as a wiping strip (38) a wing-like widened portion (36), which is connected to the said head strip and is in contact at least from time to time with the windscreen (60), at least part of the regions (36) forming the outer contour of the wiping strip (38) consisting of a natural rubber with a low friction coefficient.

2. Wiper blade according to Claim 1, **characterized in that** at least part of the regions forming the outer contour of the wiper lip strip (40) consist of a natural rubber with a low friction coefficient.

3. Wiper blade according to either of Claims 1 and 2, **characterized in that** regions (47) facing the windscreen (60) and forming the outer contour of the head strip (20) consist of a natural rubber with a low friction coefficient.

4. Wiper blade (10) for windscreens (60) of motor vehicles, with an elongated wiper strip (16), which has a uniform cross section, is held by a supporting frame (12) and can be moved over the windscreen (60) to be wiped, transversely to its longitudinal extent, while being subjected to loading with respect to the said windscreen, the wiper strip (16) having in its longitudinal extent a head strip (20), which is secured by the supporting frame (12) and consists of a synthetic rubber, an elongated swivelling web (32) and a wiper lip strip (40), which can be pressed against the windscreen (60), **characterized in that** the head strip (20) has as a wiper strip (38) a wing-like widened portion (36), which is connected to the said head strip and is in contact at least from time to time with the windscreen (60), and **in that** it comprises a base part (30) of a synthetic rubber, to which a core region of the wiping strip (38) and the swivelling web (32) belong, **in that** arranged on the core region are two wings (36) consisting of natural rubber with a low friction coefficient, extending from the said core region in opposite directions and belonging to the wiping strip (38), and **in that** the swivelling web (32) merges into a connecting strip (42), on which the wiper lip strip (40) consisting of a natural rubber with a low friction coefficient is arranged.

5. Wiper blade according to one of Claims 1 to 4, **characterized in that** at least the regions of the wiper strip (16) consisting of the natural rubber are halogenated.

6. Wiper blade according to one of the preceding claims, **characterized in that** the friction coefficient, measured at a temperature of approximately 23°C and atmospheric humidity of approximately 50%, is approximately 2.0, in particular less than 2.0.

## Revendications

1. Balai d'essuie-glace (10) pour les vitres (60) de véhicules automobiles comprenant une lame d'essuyage (16) allongée, de section constante, tenue par un étrier (12) et appliquée contre la vitre (60) à essuyer, pour être déplacée transversalement à son extension longitudinale pour balayer la vitre,
la lame (16) ayant, selon sa longueur, une barrette supérieure (20) prise par le palonnier (12), et réutilisée en caoutchouc synthétique, avec une nervure de basculement (32), longitudinale, et une lèvre d'essuyage (40) appliquée contre la vitre (60),
**caractérisé en ce que**
la barrette supérieure de (20) est traversée longitudinalement par un canal (22) recevant un élément élastique (24) en forme de rail et
la barrette supérieur (20) comporte, comme barrette de raclage (38), une extension (36), en forme d'ailes, touchant au moins de temps à autre la vitre (60) et reliée à la barrette supérieur (20),
et au moins une partie du contour extérieur des zones (36) constituant la barrette de raclage (38) sont en un caoutchouc naturel à faible coefficient de frottement.

2. Balai d'essuie-glace selon la revendication 1,
**caractérisé en ce qu'**
au moins une partie des zones formant le contour extérieur de la lèvre d'essuyage (40) sont en caoutchouc naturel à faible coefficient de friction.

3. Balai d'essuie-glace selon l'une quelconque des revendications 1 ou 2,
**caractérisé en ce que**
les zones (47) tournées vers la vitre (60) qui forment le contour extérieur de la barrette supérieur (20) sont en un caoutchouc naturel à faible coefficient de friction.

4. Balai d'essuie-glace (10) pour des vitres (60) de véhicules automobiles, comprenant une lame d'essuyage (16) allongée, de section constante, portée par un palonnier (12) et déplacée, appliquée contre la vitre (60), transversalement à son extension longitudinale, pour balayer la vitre,
la lame d'essuyage (16) étant formée d'une barrette supérieur (20), correspondant à son expansion longitudinale, prise par le palonnier (12), cette barrette étant en caoutchouc synthétique, ainsi que d'une entretoise de basculement (32), allongée, et d'une lèvre d'essuyage (40) appliquée contre la vitre (60),
**caractérisé en ce que**
la barrette supérieur (20) comporte, reliée à celle-ci, une barrette de raclage (38), constituée par une extension (36) en forme d'aile, reliée à la barrette supérieur et touchant au moins de temps à autre la vitre (60), et
elle comporte une partie de base (30) en caoutchouc synthétique avec une zone intérieure de la barrette de raclage (38) et l'entretoise de basculement (32),
la zone intérieure comporte deux ailes (36), s'étendant dans des directions opposées, faisant partie de la barrette de raclage (38), ces ailes étant en un caoutchouc naturel à faible coefficient de friction, et
l'entretoise de basculement (32) devient une barrette de liaison (42) qui porte la lèvre d'essuyage (40) et est réalisée en un caoutchouc naturel à faible coefficient de friction.

5. Balai d'essuie-glace selon l'une quelconque des revendications 1 à 4,
**caractérisé en ce qu'**
au moins les zones en caoutchouc naturel de la lame (16) sont halogénisées.

6. Balai d'essuie-glace selon l'une quelconque des revendications précédentes,
**caractérisé en ce que**
le coefficient de friction mesuré à une température de l'ordre de 23°C et une humidité de l'air d'environ 50 % est de l'ordre de 2,0 et notamment inférieur 2,0.
